# EUROPÄISCHE PATENTANMELDUNG

(11) **EP 0 547 383 A1**
(43) Veröffentlichungstag der Anmeldung: **23.06.1993**
(21) Anmeldenummer: 92119545.9
(22) Anmeldetag: 16.11.1992
(51) Int. Cl.: B23D 61/02

(54) **Kreissägeblatt**

(30) Priorität: 19.12.1991 DE 4141997
(71) Anmelder: ROBERT BOSCH GMBH, 70442 Stuttgart (DE)
(72) Erfinder: Kuhlmann, Gerhard, W-7000 Stuttgart 30 (DE)

(57) **Zusammenfassung**

Bei einem Kreissägeblatt mit einer Vielzahl von gleichmäßig über den Umfang einer Scheibe (10) verteilt angeordneten wechselseitig schneidenden Schneidezähnen (11,12) und mit einer gleichen Anzahl von zwischen den Schneidezähnen (11,12) vorhandenen Zahnlücken (13) ist zwecks Schaffung eines Sägeblattes, das weniger gefährlich und weniger laut ist sowie staubärmer arbeitet, jede auf einem Schneidezahn (11,12) folgende Zahnlücke (13) auf der von der Schneidseite des Schneidezahns (11,12) abgekehrten Scheibenseite durch eine Abdeckfläche (14) in Scheibenumfangsrichtung zumindest teilweise überdeckt, die von dem Zahnlückengrund bis hin zum Scheibenumfang reicht.

## Beschreibung

### Stand der Technik

Die Erfindung geht aus von einem Kreissägeblatt, insbesondere für Elektrohandkreissägemaschinen, der im Oberbegriff des Anspruchs 1 definierten Gattung.

Solche sog. Wechselzahn-Sägeblätter, bei denen jeder zweite Schneidezahn abwechselnd links- und rechtsseitig schneidet, dienen zum Erzeugen eines besonders sauberen und glatten Kantenschnitts. Auf jeden Schneidezahn folgt eine Zahnlücke, über die das zerspante Material aus der Schnittfuge abgeführt wird.

Kreissägeblätter können bei unachtsamer oder unsachgemäßer Handhabung zu hochgefährlichen Verletzungen führen. Sie sind beim Arbeiten sehr laut und erzeugen relativ viel Holzstaub, der bei ständigem Umgang mit solchen Sägemaschinen zur Gesundheitsgefährdung führt.

### Vorteile der Erfindung

Das erfindungsgemäße Kreissägeblatt mit den kennzeichnenden Merkmalen des Anspruchs 1 hat demgegenüber den Vorteil, daß durch die erfindungsgemäßen Abdeckflächen eine geschlossene Kreisringfläche im Bereich der Schneidezähne entsteht, welche die Eindringtiefe der Schneidezähne begrenzt und damit nur weniger gefährliche Verletzungen zuläßt. Die Abdeckflächen bilden Stützwände, die das Sägeblatt bis in den Zahnbereich versteifen und eine Führungsstütze gegenüber seitlichem Schnittdruck und nicht spielfreier Spindellagerung der Kresisägemaschine bieten. Außerdem wird eine bessere Anbindung der die Schneidezähne bildenden Hartmetallelemente ermöglicht. Damit kann das Sägeblatt schmaler ausgeführt werden, was ein schnelleres Sägen ermöglicht, sowie einen geringeren Anfall von Spänen und Holzstaub zur Folge hat. Geringerer Spanabfall verbessert die Wirksamkeit der üblicherweise vorgesehenen Absauganlage. Ein gleichschnelles Sägen mit geringerer Maschinenleistung ist möglich, was besonders für Akkusägen von Vorteil ist.

Durch die erfindungsgemäßen Abdeckflächen werden die Schwingungen der Zähne und das Zahngeräusch weitgehend gedämpft. Die von den Abdeckflächen überdeckten Zahnlücken bilden Spanfangräume, die für einen gesicherten Abtransport der Späne zur Absaugvorrichtung sorgen und dadurch ein mehrfaches Zerspanen der Späne verhindern. Insgesamt ist ein weniger staubhaltiges und weniger geräuschvolles und damit weniger gesundheitschädliches Arbeiten mit dem erfindungsgemäßen Kreissägeblatt möglich.

Durch die in den weiteren Ansprüchen aufgeführten Maßnahmen sind vorteilhafte Weiterbildungen und Verbesserungen des im Anspruch 1 angegebenen Kreissägeblatts möglich.

In einer bevorzugten Ausführungsform der Erfindung werden die Abdeckflächen durch Platten gebildet, die seitlich auf der Scheibe des Kreissägeblatts aufgelötet werden. Alternativ können die Zahnlücken und die Abdeckflächen durch seitliches Ausprägen von Materialsegmenten aus der Scheibe gebildet werden.

In einer vorteilhaften Ausführungsform der Erfindung werden zwischen aufeinanderfolgenden Abdeckflächen im Wechsel der Schneidezähne Schlitze vorgesehen, in denen Zahnköpfe aus Hartmetall eingesetzt sind.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: ausschnittweise eine Draufsicht eines als sog. Wechselzahn-Sägeblatt ausgebildeten Kreissägeblatts,
- Fig. 2: ausschnittweise eine Ansicht einer Abwicklung des Kreissägeblatts in RichtungPfeil II in Fig. 1,
- Fig. 3 und 4: jeweils eine gleiche Darstellung wie in Fig. 2 gemäß einem zweiten und dritten Ausführungsbeispiel.

### Beschreibung der Ausführungsbeispiele

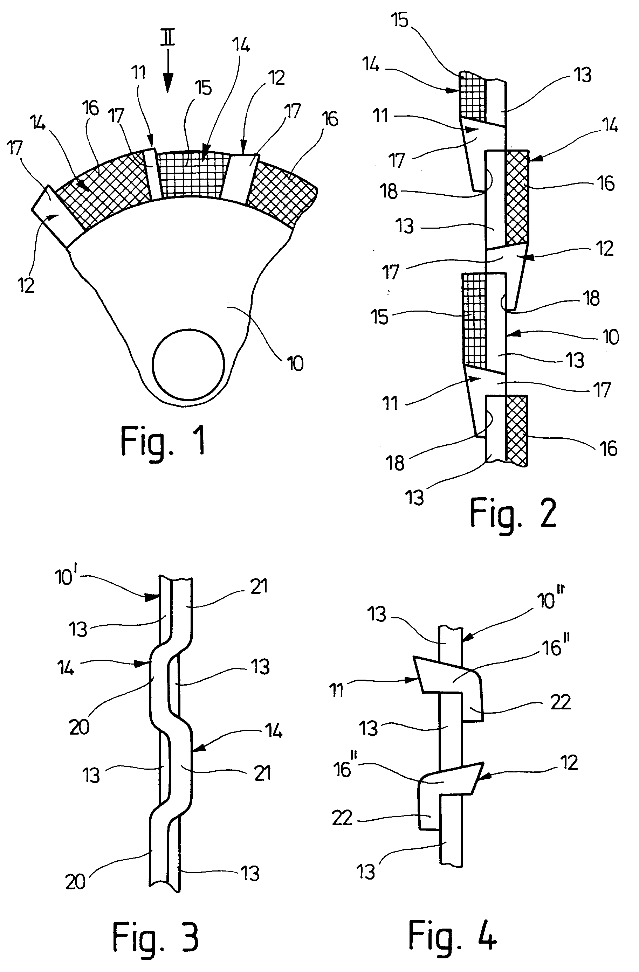

Das in Fig. 1 ausschnittweise schematisch dargestellte Kreissägeblatt für eine Elektrohandkreissägemaschine weist eine Scheibe 10 mit einer Vielzahl von gleichmäßig über den Umfang der Scheibe 10 verteilt angeordneten Schneidezähnen 11,12 und eine gleiche Anzahl von zwischen den Schneidezähnen 11,12 vorgesehenen Zahnlücken 13 auf. Die Schneidezähne 11,12 schneiden aufeinanderfolgend abwechselnd linksseitig bzw. rechtsseitig und stehen mit ihren Schneidköpfen entsprechend links und rechts über die Scheibenebene vor. In Fig. 1 und 2 sind die linksseitigen Schneidezähne mit 11 und die rechtsseitigen Schneidezähne mit 12 gekennzeichnet. Jede auf einen Schneidezahn 11,12 folgende Zahnlücke 13 (Fig. 2) ist auf der von der Schneidseite des Schneidezahns 11,12 abgekehrten Seite der Scheibe 10 durch eine vom Zahnlückengrund bis hin zur Zahnlückenöffnung am Scheibenumfang reichende Abdeckfläche 14 überdeckt. In dem Ausführungsbeispiel in Fig. 1 und 2 sind die Abdeckflächen 14 durch Platten 15,16 gebildet, die abwechselnd links und rechts auf der Scheibe 10 im Bereich der Zahnlücken 13 aufgelötet sind. Zur zeichnerischen Verdeutlichung der linksseitig an der Scheibe 10 angeordneten Platten 15 und der rechtsseitig an der Scheibe angeordneten Platten 16 sind diese in Fig. 1 und 2 durch unterschiedliche Kreuzschraffuren markiert. Zwischen aufeinanderfolgenden Platten 15,16 verbleiben im Wechsel der Schneidezähne 11,12 Schlitze, in denen Zahnköpfe 17 aus Hartmetall eingesetzt sind. Jeder Hartmetall-Zahnkopf 17 trägt auf seiner Schneidseite eine Lötfläche 18, die sich in rückwärtiger Verlängerung des Hartmetall-Zahnkopfs 17 einstückig mit diesen erstreckt. Die Lötfläche 18 dient zum zusätzlichen Anlöten des Hartmetall-Zahnkopfes 17 an der Seite der Scheibe 10.

In Fig. 3 ist schematisch dargestellt, wie bei einem Kreissägeblatt gemäß einem weiteren Ausführungsbeispiel aus der Scheibe 10' die Zahnlücken 13 mit den zugeordneten Abdeckflächen 14 durch wechselseitiges seitliches Ausprägen von Materialsegmenten 20,21 gebildet sind. Die Hartmetall-Zahnköpfe der abwechselnd linksseitigen bzw. rechtsseitigen Schneidezähne, die wiederum in Schlitzen zwischen aufeinanderfolgenden Materialsegmenten 20,21 eingesetzt werden, sind hier der Übersichtlichkeit halber nicht dargestellt.

Bei dem in Fig. 4 dargestellten weiteren Ausführungsbeispiel eines Kreissägeblattes sind die Abdeckflächen 14 für die Zahnlücken 13 von Stützwangen 22 gebildet, die sich in rückwärtiger Verlängerung von den Hartmetall-Zahnköpfen 16'' einstückig mit diesen auf derjenigen Seite der Scheibe 10'' erstrecken, die von der Schneidseite der Schneidezähne 11,12 abgekehrt ist. Mit diesen Stützwangen 22 werden die Zahnlücken 13 in Umfangsrichtung jedoch nur teilweise abgedeckt.

## Patentansprüche

1. Kreissägeblatt, insbesondere für Elektrohandkreissägemaschinen, mit einer Vielzahl von gleichmäßig über den Umfang einer Scheibe verteilt angeordneten Schneidezähnen, die aufeinanderfolgend abwechselnd linksseitig bzw. rechtsseitig schneiden , und mit einer gleichen Anzahl von zwischen den Schneidezähnen vorhandenen Zahnlücken, dadurch gekennzeichnet, daß jede auf einen Schneidezahn (11,12) folgende Zahnlücke (13) auf der von der Schneidseite des Schneidezahns (11,12) abgekehrten Scheibenseite durch eine vom Zahnlückengrund bis hin zur Zahnlückenöffnung am Scheibenumfang reichende Abdeckfläche (14) in Scheibenumfangsrichtung zumindest teilweise überdeckt ist.

2. Kreissägeblatt nach Anspruch 1, dadurch gekennzeichnet, daß die Abdeckflächen (14) von auf den Scheibenseiten aufgelöteten Platten (15,16) gebildet sind.

3. Kreissägeblatt nach Anspruch 1, dadurch gekennzeichnet, daß die Zahnlücken (13) mit Abdeckflächen (14) durch wechselseitiges seitliches Ausprägen von Materialsegmenten (20,21) aus der Scheibe (10') gebildet sind.

4. Kreissägeblatt nach Anspruch 2 oder 3, dadurch gekennzeichnet, daß zwischen aufeinanderfolgenden Abdeckflächen (14) im Wechsel der Schneidezähne (11,12) Schlitze verbleiben, in denen Zahnköpfe (17) aus Hartmetall eingesetzt sind.

5. Kreissägeblatt nach Anspruch 4, dadurch gekennzeichnet, daß die Hartmetall-Zahnköpfe (17) auf der Schneideseite eines jeden Schneidezahns (11,12) Lötflächen (18) zum Anlöten an die Scheibenseiten tragen, die sich in rückwärtiger Verlängerung der Hartmetall-Zahnköpfe (17) einstückig mit diesen erstrecken.

6. Kreissägeblatt nach Anspruch 1, dadurch gekennzeichnet, daß die Abdeckflächen (14) von Stützwangen (22) gebildet sind, die sich in rückwärtiger Verlängerung von die Schneidezähne (11,12) bildenden Hartmetall-Zahnköpfen (17) einstückig mit diesen auf den Scheibenseiten erstrecken und an diesen angelötet sind.
